Europäisches Patentamt

(19) European Patent Office

Office européen des brevets

(11) Publication number: **0 232 230 B1**

## (12) EUROPEAN PATENT SPECIFICATION

(45) Date of publication of patent specification :
**13.11.91 Bulletin 91/46**

(51) Int. Cl.⁵ : **F24H 1/00**

(21) Application number : **87830042.5**

(22) Date of filing : **02.02.87**

(54) **Condensation boiler with conditioning of fumes.**

(30) Priority : **07.02.86 IT 1242286**

(43) Date of publication of application :
**12.08.87 Bulletin 87/33**

(45) Publication of the grant of the patent :
**13.11.91 Bulletin 91/46**

(84) Designated Contracting States :
**BE DE ES FR GB GR NL**

(56) References cited :
**EP-A- 0 127 939**
**EP-A- 0 144 254**
**DE-A- 3 411 437**

(73) Proprietor : **FONDERIE E OFFICINE SAN
GIORGIO PRA S.P.A.
Via G. Ratto 27
I-16157 GENOVA PRA (IT)**

(72) Inventor : **Orsi, Armando
Via Laviosa 5B/15
I-16156 Genoa Pegli (IT)**

(74) Representative : **Notaro, Giancarlo
c/o Jacobacci-Casetta & Perani S.p.A. Via
Alfieri, 17
I-10121 Torino (IT)**

EP 0 232 230 B1

## Description

The subject-matter of this invention consists of a condensation boiler with conditioning of the fumes. The conditions for evacuation of the fumes of a traditional boiler capable of complying with the regulations in force in all EEC countries are well-known.

First of all, a traditional gas boiler is equipped with a draught diverter which is a mixing chamber where combustion products and air from atmosphere are mixed together.

The function of this is to exclude the influence of the characteristics of the chimney on combustion, in particular on the excess air. The geometry of the draft diverter or mixing chamber, also, makes it possible to cater for exceptional conditions as provided by the regulations such as clogging of the chimney and the prolonged presence of wind blowing downwards along the flue.

The draught diverter is therefore an efficient safety device against malfunctioning of the chimney.

It has yet another function, and that is to dilute the products of combustion with the air of the atmosphere, so that the partial pressure of the steam present in the fumes is lowered and at the same time the temperature at which the steam passes into a liquid state is also lowered. The aim of this is to ensure that the contact between the fumes and the surface of the chimney (which is normally colder) does not cause condensation of the steam present.

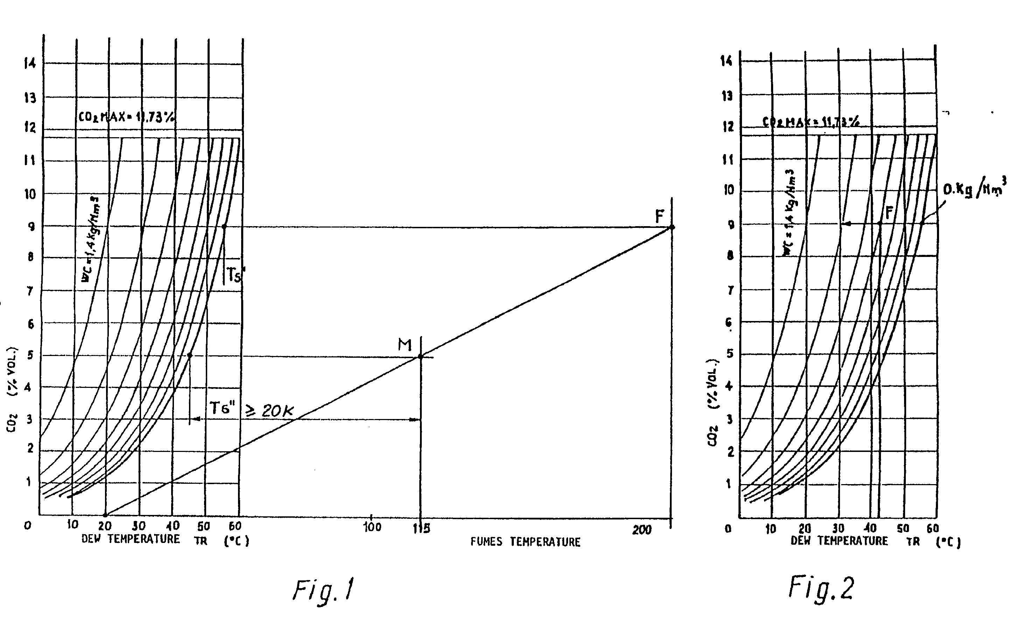

The mixing of the air and the fumes which takes place in the draught diverter may be studied in an equilibrium diagram. In the one shown in figure 1, F represents the excess air conditions (measured as a percentage of $CO_2$ in the anhydride fumes) and the temperature conditions of the fumes as they enter the draught diverter. In the example, the temperature is 200°C and the percentage of $CO_2$ is 9%.

Point A represents the air temperature in the atmosphere, for instance 20°. The properties of the diagram make it possible to describe with a good degree of approximation the conditions of the mixture of A and F with a straight line segment. A possible mixture is indicated by M. The ratio AM/MF is proportional to the ratio between the volumes of fumes and atmospheric air in the mixture. With dilution, the condensation temperature of the steam passes from level Ts' to level Ts", lower than the former.

The French standard NFD 35-331 indicates that evacuation of the fumes may be considered satisfactory if, among other things, the distance between M and Ts" is greater than 20°K.

Use of this French standard dates back to 1965, and it has therefore been widely tested. The criterion contained therein may therefore by used for other cases as a parameter of correct evacuation.

If the conditions of the combustion products of a conventional condensation boiler (that is to say of the forced draught type) are considered, and the representative point is indicated in the equilibrium diagram, it is seen than the criterion indicated is never observed.

In particular, if the boiler is running under condensation conditions, the representative point falls to the left of the saturation curve (0 kg of condensate/ Nm3) in correspondence with a parametric curve in WC. WC represents the mass of condensate separated from the products of combustion of the unit of volume of combustible gas. It is obvious that for each separation of water from the fumes there is a corresponding lowering of the temperature at which more steam may pass into a liquid state. The WC curves therefore represent simultaneously the temperature level TR at which the products of combustion impoverished of a mass of water reach saturation and the quantity of condensation which is separated by cooling down the untreated fumes to a temperature TR.

In conventional condensation boilers, depending on the temperature of the water running through the condenser, WC may reach 1.2 kg/Nm3. The representative point of the conditions of the fumes may therefore be, for example, F of figure 2.

Now, if the fumes F are sent to any chimney, their contact with surfaces having lower temperatures causes further condensation. This makes it necessary to build watertight sealed chimneys. The condensation which forms inside these is conveyed by the chimney itself to the boiler where it is collected and evacuated.

Sealed chimneys represent a problem from the point of view of installation costs in built-up areas and old buildings, and of running costs (corrosion is possible, and this makes often makes replacement necessary).

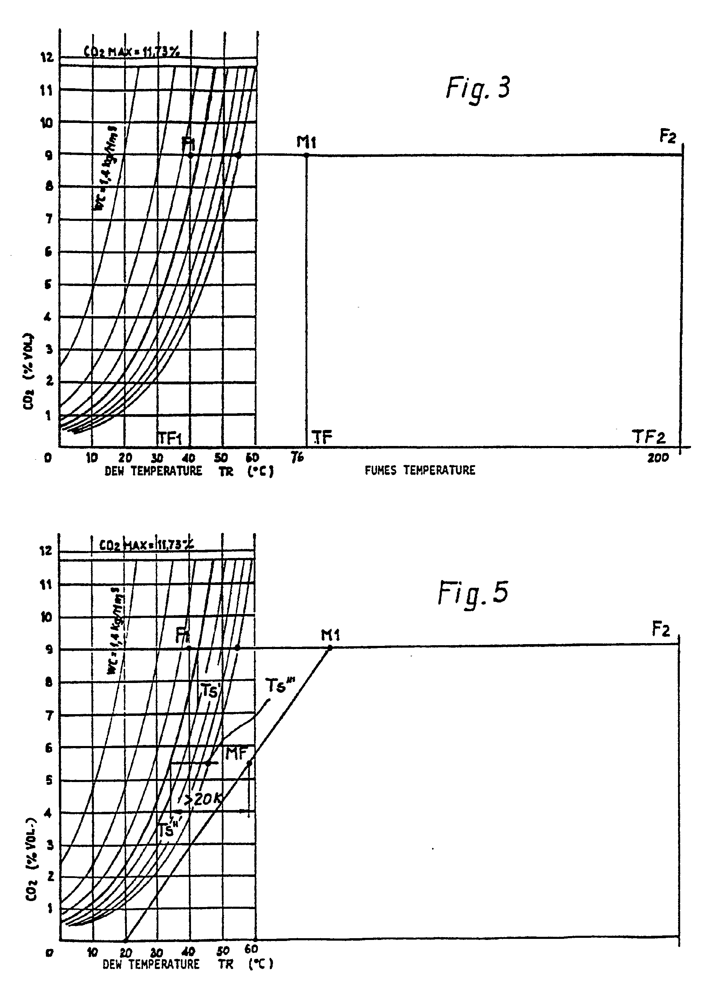

With the boiler according to this invention, this problem is eliminated by conditioning the fumes. This conditioning procedure makes it possible to keep the temperature of the fumes higher than the dew point TF 1, by mixing with part of the same fumes (F2) bled off above the condenser. This transformation too may be shown in the equilibrium diagram. It is described in figure 3 by line F1 - F2, giving rise to mixture M1 of the conditioned fumes.

DE-A 3411437 describes a condensation boiler with conditioning of combustion products of the type providing a combustion chamber, a primary exchanger, in which the fluid which absorbs the heat of the combustion products consists of water, and a secondary exchanger, or condenser.

Furthermore the condensation boiler according to DE-A 3411437 is equipped with a gauged bypass pipe for feeding directly to the chimney a fraction of the combustion products which have passed through the primary exchanger: said chimney therefore collects both the fraction of the combustion products which have passed through the secondary exchanger, or condenser, and the fraction of combustion products coming directly from the primary exchanger.

Nevertheless according to DE-A-3411437 the combustion products run along a path consisting of an ascending tract, a descending tract, and a final ascending tract, the latter being inside the chimney. Therefore the boiler according to DE-A-3411437 must necessarily be provided with a mechanical exhaust, such as a fan or the like.

Further the gaseous compounds reaching the chimney consist of combustion products only so that temperature and water content of the gaseous products in the chimney may be controlled only within a limited range.

EP-A-0144254 describes a condensing boiler comprising a primary heat exchanger, a secondary heat exchanger and a mixing chamber where a fraction of the burning air, after heating in the secondary exchanger, is mixed with the combustion products which have passed through both the first and the second heat exchanger.

According to EP-A-0144254, both in the primary and in the secondary heat exchanger, the heated fluid is the burning air so that in the mixing chamber are mixed the combustion products and a fraction of the burning air which has passed through the primary exchanger and which temperature is higher than the room temperature.

In this case too temperature and water content in the chimney may be controlled only within a limited range.

Further a mechanical means, such as a fan, is needed due to the complicated path of the burning air.

According to the invention a procedure is claimed for conditioning the combustion products coming from a condensation boiler, that is to say from a boiler having a primary exchanger and a secondary exchanger or condenser, wherein a fraction of the combustion products, which have passed through the primary exchanger, is sent directly to the chimney, where said fraction is mixed with the fraction which is passed also through the secondary exchanger, and wherein the fraction of the combustion products which has passed through the secondary exchanger is mixed with air from the atmosphere in a mixing chamber; such a procedure is characterized in that all the combustion products follow ascending paths by natural suction throughout the boiler and in that the diluting air is drawn into the mixing chamber, also in an ascending manner, through an opening in the bottom of said mixing chamber, by natural suction alone.

The subject matter and advantages of the invention are also explained in the following description of forms of embodiment given by way of example only, with particular reference to the attached drawings, in which :

– figure 1, already summarily described, is the equilibrium diagram of a mixture of fumes and excess contributing air, and which shows the beneficial effect of a draught diverter;

– figure 2, also already summarily described, is the equilibrium diagram of an air-fumes mixture typical of a conventional (i.e. forced draught) condensation boiler;

– figure 3 is an air-fumes equilibrium diagram applied to a conditioning of the fumes according to this invention;

– figure 4 shows the density of the air mixed in various manners with the products of methane combustion as the temperature varies, with and without condensation;

– figure 5 is yet another equilibrium diagram showing the beneficial effect of the conditioning of the fumes, already illustrated in figure 3, associated with the presence of a draught diverter, which mixes air with the conditioned fumes;

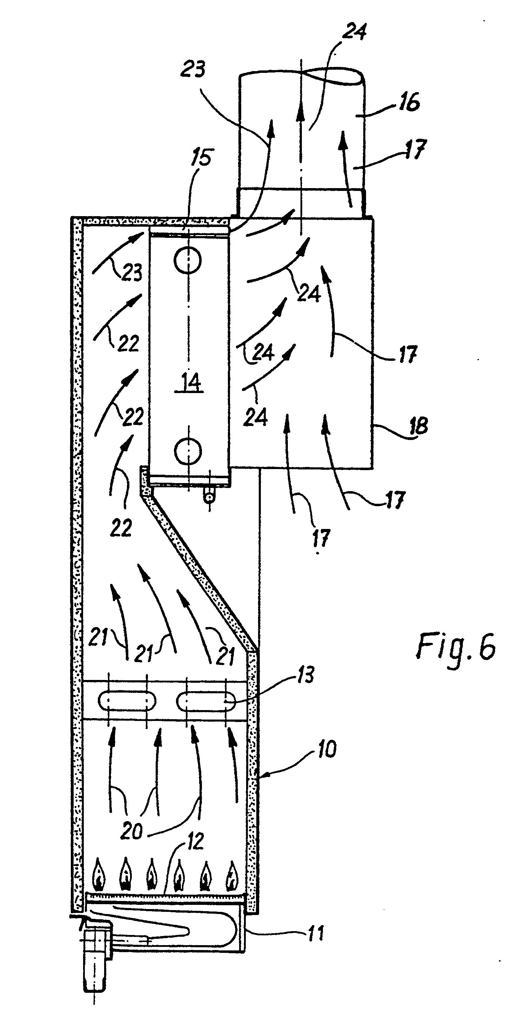

– finally, figure 6 is a vertical section of a preferred embodiment of a boiler according to the invention, in which both conditioning of the fumes and mixing of the conditioned fumes with air are provided. With specific reference to figure 1, it shows the beneficial effect of a draught diverter, which allows mixing of air, presumed to be dry, with the fumes coming form a boiler in which the excess of air is such that it generates in the above fumes a percentage of $CO_2$ of 9% in volume.

According to this figure, is is presumed that the fumes having a temperature of 200°C are mixed with dry air at a temperature of 20°C.

In this case, the ratio between the quantity of dry air at 20°C fed by the draught diverter and the fumes is about 0.8, so that the temperature of the resulting mixture is equal to about 115°C while the percentage of $CO_2$ drops to about 5% in volume.

Point N shows in the equilibrium diagram of figure 1 that the temperature of the mixture is far higher than T"S, the dew point corresponding to the new volume percentage of $CO_2$.

In figure 1, as has been seen, the parabolic curve farthest to the right represents the dew point at the various concentrations of $CO_2$.

The remaining curves represent identical quantities of condensation air as the temperature and $CO_2$ percentages vary.

In figure 2, point F in the equilibrium diagram shows the characteristics of the fumes coming out of a conventional forced-draught condenser at a temperature of 42°C and with a 9% concentration in volume of $CO_2$ as in the previous case.

It can be seen clearly that the fumes inside the chimney along walls having a temperature lower than 42°C will give rise to further condensation, as shown schematically by the arrow pointing left starting from point F of figure 2.

Figure 3 shows the effect of a first form of embodiment of the invention, providing conditioning of the fumes without mixing with air.

A first fraction of fumes passes through a conventional condenser and leaves it at a temperature of 40°C. The concentration of CO2 is 9% in volume, so as to allow a comparison with the previous figures.

The conditions of this first fraction of fumes which have passed through the condenser are shown in the equilibrium diagram by point F1.

It is clear that on coming into contact with the colder walls of the chimney, these fumes would give rise to further condensation.

In this case, however, according to the invention, a second fraction of fumes bypasses the condenser, and still at a temperature of about 200°C is mixed with said first fraction of fumes which has passed through the condenser.

In the equilibrium diagram shown in figure 3, the characteristics of the mixture formed by the first fraction of fumes, having passed through the condenser, and by the second fraction, which has not passed through the condenser, are represented by point M1, having a temperature TF higher than the dew point TF1. In order to increase the difference in temperature between TF and TF1 according to the preferred form of embodiment of the invention, a fraction of dry air, as shown in figure 5, is added to the mixture of fumes described in figure 3.

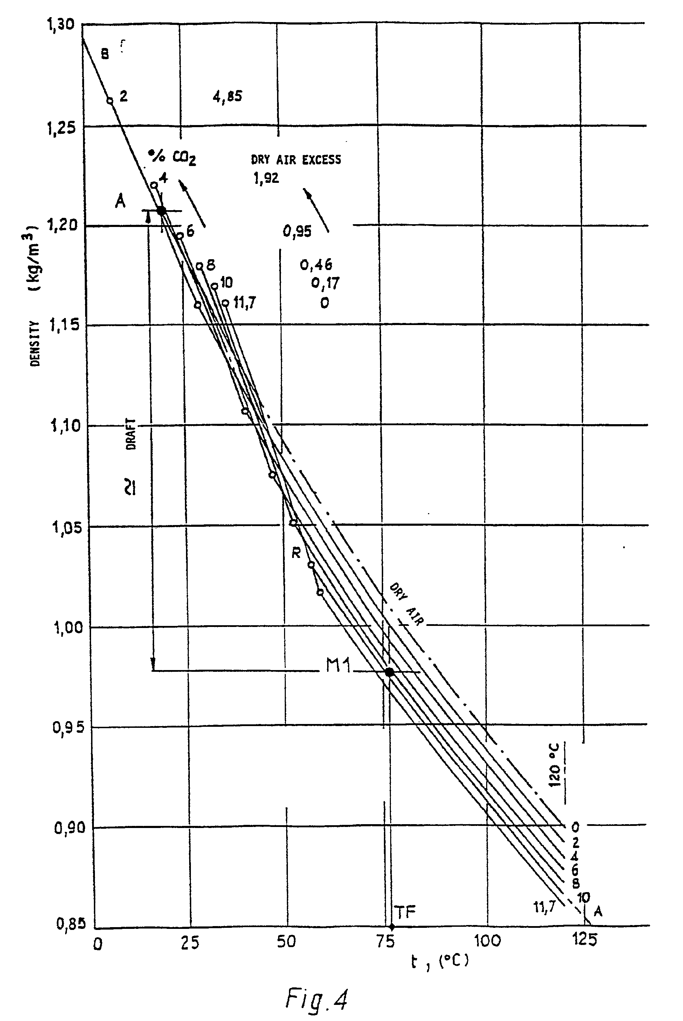

Figure 4 makes it easier to understand figure 5. Point M1, which is the same for figures 3 and 5, represents the characteristics of the mixture of fumes, only part of which have passed through the condenser.

Point A of figure 5 corresponds to point A of figure 1. The resulting mixture of dry air (point A), the fraction of fumes which has passed through the condenser (point F1) and the fraction of fumes which has not passed through the condenser (point F2) is now represented by point MF, to which a lower percentage of CO2 corresponds, and which has a temperature sufficiently higher than the condensation temperature $T''_s$.

Figure 6 illustrates schematically a device suitable for implementing the preferred form of embodiment illustrated in figure 5.

The boiler 10 has an inlet 11 for the air required to support the combustion, and a burner 12.

The fumes represented by the arrows (20) traverse the tube nest or primary exchanger (13) of the boiler, to which they give up most of their sensitive heat.

On leaving the tube nest or primary exchanger 13, the fumes 21 still have a high temperature, let us say 200°C, and contain steam.

In order to recover at least in part the latent heat of this steam, the combustion gases 21 are split up into two fractions : the first, 22, passes through the condenser 14, the second, 23, is sent through a bypass, 15, directly to the chimney, where it is mixed with the fumes 24 which have passed through the condenser 14 and then with the diluting air 17 fed to the chimney 16 through the draught diverter or mixing chamber 18.

In figure 6, arrows 23, 24 and 17 represent the different origin of the three gaseous fractions which reach the chimney inside which these three gaseous fractions are actually thoroughly mixed together; the mixture of these gases has the characteristics represented by point MF of figure 5, while the characteristics represented by point A, F2 and F1 are those of the fractions corresponding to arrows 17, 23 and 24 respectively.

Conditioning of the fumes constitutes a minimum energy loss, amply compensated by the other aspects of the condensation boiler according to the invention, and the performance of the condensation boiler claimed is in any case higher than the minimum values required under the regulations in force in those EEC countries which have dealt with the problem.

The conditioned fumes M1 are the result of a heating obtained in the condensation boiler according to the invention in the simplest and least costly manner : by mixing. Under any running conditions they reach a temperature sufficient to trigger a natural draught.

Figure 4 shows the density of the products of combustion of pure methane, to be compared with the density A of the external air, taken to be dry.

As it can be seen, it is sufficient to choose a suiable position M1, in figure 3, for the density of the fumes and the density of the air to be distant enough to guarantee a natural draught.

In the case of the condensation boiler according to the invention, this difference is so great as to allow the use of a draught diverter inside it. The mixing of the fumes with air is shown in the equilibrium diagram, as shown in figure 5. Point MF now represents the final conditions of the fumes at the entrance to an 0.5 m chimney, in line with the testing regulations in force. This process has been thoroughly tested on a trial basis, and no leakage of fumes from the draught diverter have been found, not even using the most accurate detection methods.

It has been found, furthermore, that the percentage of CO2 in the anhydride fumes remains practically constant for the whole return water temperature range. This aspect is decisive for the evaluation of the correct functioning of the combustion equipment of the draught diverter and in evaluating the correctness of the design.

According to the invention, therefore, taking advantage to a maximum of the use of conditioning of the fumes, the possibility of avoiding saturation of the fumes of condensation boilers even for domestic use has been verified. This allows them to be connected up to conventional chimneys.

Verification of the existence of a sufficient natural draught has also made it possible to equip the claimed condensation boiler (see figure 6) with a draught diverter. The great advantage of the inclusion of a draught diverter is the possibility of simplifying the control and safety equipment up to the point that on the claimed condensation boiler the same equipment installed on conventional gas boilers has been used, with the consequent further considerable advantages for installation, maintenance and operation.

## Claims

1. Procedure for conditioning the combustion products coming from a condensation boiler (10), that is to say from a boiler having a primary exchanger (13) and a secondary exchanger or condenser (14), wherein a fraction (23) of the combustion products (21), which have passed through the primary exchanger, is sent directly to the chimney (16), where said fraction (23) is mixed with the fraction (22,24) which has passed also through the secondary exchanger (14), and wherein the fraction (24) of the combustion products (21) which has passed through the secondary exchanger (14) is mixed with air (17) from the atmosphere in a mixing chamber (18), characterized in that all the combustion products (22,24;23) follow ascending paths by natural suction throughout the boiler and in that the diluting air (17) is drawn into the mixing chamber (18), also in an ascending manner, through an opening in the bottom of said mixing chamber (18), by natural suction alone.

## Patentansprüche

1. Verfahren zum Konditionieren der Verbrennungsprodukte aus einem Kondensationskessel (10), i.e. aus einem Kessel mit einem Primärtauscher (13) und einem Sekundärtauscher oder Kondensator (14), wobei ein Teil (23) der Verbrennungsprodukte (21), die den Primärtauscher durchlaufen haben, dem Kamin (16) direkt zugeführt wird, wo dieser Teil (23) mit dem Teil (22, 24) vermischt wird, der den Sekundärtauscher (14) ebenfalls durchlaufen hat, und wobei der Teil (24) der Verbrennungsprodukte (21), der den Sekundärtauscher (14) durchlaufen hat, mit Luft (17) aus der Atmosphäre in einer Mischkammer (18) vermischt wird, **dadurch gekennzeichnet, daß** alle Verbrennungsprodukte (22, 24; 23) durch natürlichen Unterdruck im gesamten Behälter aufsteigenden Strömungswegen folgen und daß die Verdünnungsluft (17) ebenfalls aufsteigend in die Mischkammer (18) durch eine öffnung im Boden der Mischkammer (18) und nur durch natürlichen Unterdruck angesaugt wird.

## Revendications

1. Procédé de conditionnement des produits de combustion issus d'une chaudière à condensation (10), c'est-à-dire d'une chaudière comportant un echangeur primaire (13) et un échangeur secondaire ou condensateur (14), dans lequel une fraction (23) des produits de combustion (21), qui sont passés dans l'échangeur primaire, est envoyée directement vers la cheminée (16), où ladire fraction (23) est mélangée avec la fraction (22, 24) qui est passée également dans l'échangeur secondaire (14), et dans lequel la fraction (24) des produits de combustion (21) qui est passée dans l'échangeur secondaire (14) est mélangée avec de l'air (17) de l'atmosphère dans une chambre de mélange (18), caractérisé en ce que tous les produits de combustion (22, 24, 23) suivent des chemins ascendants par aspiration naturelle dans la chaudière et en ce que l'air de dilution (17) est aspiré dans la chambre de mélange (18), également de manière ascendante, dans une ouverture dans le fond de ladite chambre de mélange (18), par aspiration naturelle uniquement.

Fig.2

Fig.1

Fig. 3

Fig. 5

7

Fig.4

Fig.6